# EUROPEAN PATENT SPECIFICATION

(11) **EP 1 851 986 B1**
(45) Date of publication and mention of the grant of the patent: **23.07.2008**
(21) Application number: 05794771.5
(22) Date of filing: 04.10.2005
(51) Int. Cl.: H04Q 7/38, H04Q 7/22

(54) **A METHOD OF OPERATING A COMMUNICATION SYSTEM**
VERFAHREN ZUM BETRIEB EINES KOMMUNIKATIONSSYSTEMS
PROCEDE D'EXPLOITATION D'UN SYSTEME DE COMMUNICATION

(30) Priority: 13.10.2004 GB 0422630
(43) Date of publication of application: 07.11.2007
(73) Proprietor: Nokia Siemens Networks GmbH & Co. KG, 81541 München (DE)
(72) Inventor: RATTRAY, Christopher James, Southampton Hampshire SO17 1EN (GB); DAVIS, Simon Paul, Romsey Hampshire S051 7LX (GB); PROVVEDI, Leonardo, Eastleigh Hampshire SO53 4LT (GB)
(74) Representative: Ruuskanen, Juha-Pekka
(86) International application number: PCT/GB2005/003805
(87) International publication number: WO 2006/040515

(56) References cited:
- EP-A- 1 271 851
- WO-A-00/49824
- WO-A-01/76165
- WO-A-03/003767
- WO-A-20/05099294
- GB-A- 2 402 846

## Description

This invention relates to a method of operating a communication system, in particular for mobile phones.

Evolving second generation mobile radio access network, as defined in the standards of the 3GPP GERAN organisation (third generation project partnership (3GPP) global system for mobile communication (GSM)/enhanced data GSM environment (EDGE) radio access network (GERAN)), currently has a limited capability to provide simultaneous circuit switched (CS) and packet switched (PS) connections to a mobile station (MS). This functionality is known as dual transfer mode (DTM).

These mechanisms were defined when only interactive and background PS data services were supported and as a consequence CS connections are always favoured over PS connections when there is a lack of available resources, since the PS call was assumed to be non-time critical resulting in PS data being dropped in favour of CS voice calls.

Recently, the requirement for real-time PS services such as video streaming and voice over internet protocol (VoIP) has driven the GERAN standardisation work to define functionality to provide the more stringent requirements of these services. However, there is no facility for the user to choose whether CS calls are preferred over PS services in a DTM environment when there are insufficient resources to cope with both.

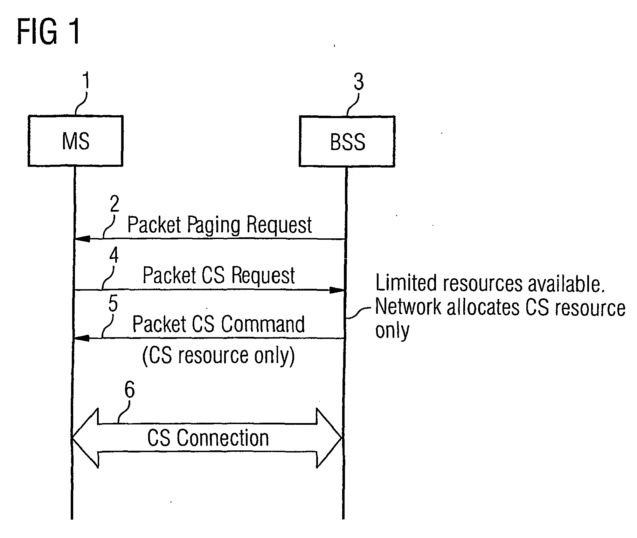

Currently the behaviour of an MS and base station system (BSS) in the case of a CS page (mobile terminated) during a PS session is as shown in Fig. 1. A user at an MS 1 has an ongoing PS session and is being paged by a packet paging request 2 for a CS call by the network from a BSS 3. The CS page 2 is transferred on the packet signalling channel to the MS 1. As the MS is DTM capable, it responds with a request for addition CS resources using the Packet CS Request message 4 on a PS signalling channel. However, in this example, either the network does not have enough resources or the correct set of resource, as DTM requires contiguous timeslots for the PS and CS resources, to allocate both CS and PS resources. According to current procedures, the network therefore prefers CS resource over PS and allocates the CS resource via a packet CS command 5, thus dropping the PS session and setting up a CS connection 6.

The user may not necessarily wish for this to happen, particularly if the user does not even know who the calling party is at this stage. The current video streaming session or VoIP call may be considered by the user to be of more importance than the incoming CS call.

WO03/003767 describes a system in which a terminal can support both CS and PS connections. The terminal is asked to indicate whether or not it will accept a simultaneous PS call when a CS call is in progress. This system does not take any account of the situation in which there are insufficient resources for both connections to be provided and there is no mechanism for using the network's capability as the basis for deciding whether to initiate a PS connection with the CS connection, because the adaption layer does not have any data about network resource limitations.

In accordance with a first aspect of the present invention, a method of operating a communication system comprising a network and at least one terminal comprises receiving a page for a circuit switched call at the terminal whilst the terminal is engaged in a packet switched call; providing from the terminal to the network an indication of a user preference for receiving the circuit switched call or maintaining the packet switched call, if there are insufficient resources for operating the calls simultaneously; wherein the network assesses whether there are sufficient resources for setting up the circuit switched call to operate simultaneously with the packet switched call; and continues communication between the network and the terminal in accordance with the indicated preference.

The present invention gives control to the user, so that they are able to determine which of an ongoing PS call or a new CS call gets priority, on those occasions when the resource is insufficient or incorrect for both to operate simultaneously.

The user preference indication can be made at various times during the operation of the communication system, but preferably, the user preference indication is made in response to an indication of the identity of the circuit switched call.

Alternatively, the user preference indication is made before starting a packet switched call.

Preferably, the method further comprises providing an indication of the source of the circuit switched call to the terminal and enabling the user to change or confirm the user preference indication in response to the source indication.

Preferably, a circuit switched signalling message is encapsulated as a packet switched message and sent on an existing packet switched resource to page the terminal in respect of the circuit switched call, although other mechanisms can be used.

Preferably, if the user preference indication is for the packet switched call, the network refrains from sending any further circuit switched pages to the terminal until the packet switched call is complete.

Preferably, the network comprises a second or third generation mobile phone network.

Preferably, the network comprises GERAN, UTRAN or GSM.

An example of a method of operating a communication system in accordance with the present invention will now be described with reference to the accompanying drawings in which:
Figure 1 illustrates conventional dual transfer mode behaviour with a circuit switch page and limited resources;
Figure 2 illustrates a first example of a method according to the present invention, in which CS call signalling is tunnelled over PS resources;
Figure 3 illustrates the method of the present invention in which the user indicates a preference for the PS session to continue in the Packet CS request; and,
Figure 4 illustrates an example of the method of the present invention where a user preference indication for PS resources with a CS page and limited resources is given at the start of the PS session.

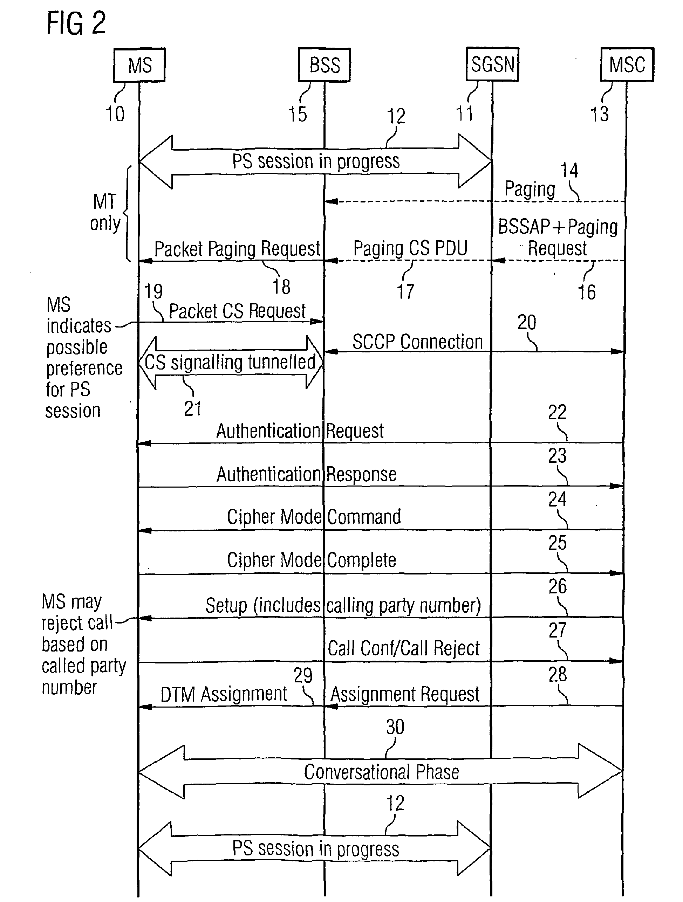

An example of the method of the present invention is shown with reference to Fig. 2, which shows a simplified version of the signalling message exchange. A mobile station 10 is engaged in a PS session 12 with the network via a serving general support node (SGSN) 11. A mobile station controller (MSC) 13 sends a page 14 to a BSS 15 and sends a base station subsystem application part (BSSAP), plus paging request 16 to the SGSN 11, which sends a CS paging protocol data unit (PDU) 17 to the BSS 15. The BSS creates a packet paging request 18 to send to the MS 10. The MS sends back to the BSS, a packet CS request 19, which, in this example, includes an indication of a possible preference for continuing the PS session if there is a shortage of resource, depending on who is calling. If the network can allocate both CS and PS resources it will do so, however if it is not possible to allocate both, the network will set up a signalling connection 20 from the BSS to the MSC and tunnel all non access stratum (NAS) messages through a packet signalling channel 21 between the BSS and the MS.

The MSC and MS go through a series of authentication stages 22, 23 and security steps 24, 25 until a setup message 26 from the core network containing the calling party number is sent. This gives the user the option 27 to reject the call in favour of the existing PS session or accept the call knowing that the current PS Session may have to be dropped for insufficient resources for DTM operation. The MSC sends an assignment request 28 to the BSS and the BSS sends a DTM assignment 29 to the MS. In this example, there are sufficient resources for both a circuit switched conversation 30 and the PS session 12 to continue in parallel.

The present invention provides the user with more information about the calling party without risking the loss of an ongoing PS session, since the user may wish to know who is calling before deciding to accept the incoming call. This requirement means that the calling party number is made available to the MS in question before there is any possibility of PS resources being dropped. Conventionally, a CS resource has to be allocated for this signalling, which meant that the PS resources had to be dropped. However, the present invention avoids this by tunnelling the signalling messages to the user over the existing PS connection up to the point where the called party number is passed to the mobile over the PS resources and the decision on which takes precedence is made.

The invention tunnels the necessary CS signalling messages to and from the mobile via the packet resources, which coupled with the ability of the mobile to signal to the network (on a per session basis) whether it currently prefers the PS resources over the CS resources, enables the user to choose one set of resources over the other in the case where the network is unable to assign both.

Initially a circuit switched signalling resource is set up, which might be the same resources as the call goes over later. The same messages are used as if the call was a CS call, but the messages are encapsulated in a format so that they can go over the packet switched resources. Effectively, extra bits are added to the message, so that the message looks like a packet switched one before being sent over the PS resource and then the additional parts are removed when the message is received at the other end. There is no noticeable effect on the ongoing PS video clip at that time, because it is designed to cope with some signalling messages.

An additional benefit of tunnelling the CS signalling through the PS signalling channel is that the CS set-up may be faster than the use of a stand-alone dedicated control channel (SDCCH) signalling channel. Thus, this method can also be used to decrease CS call set-up times for DTM capable mobiles.

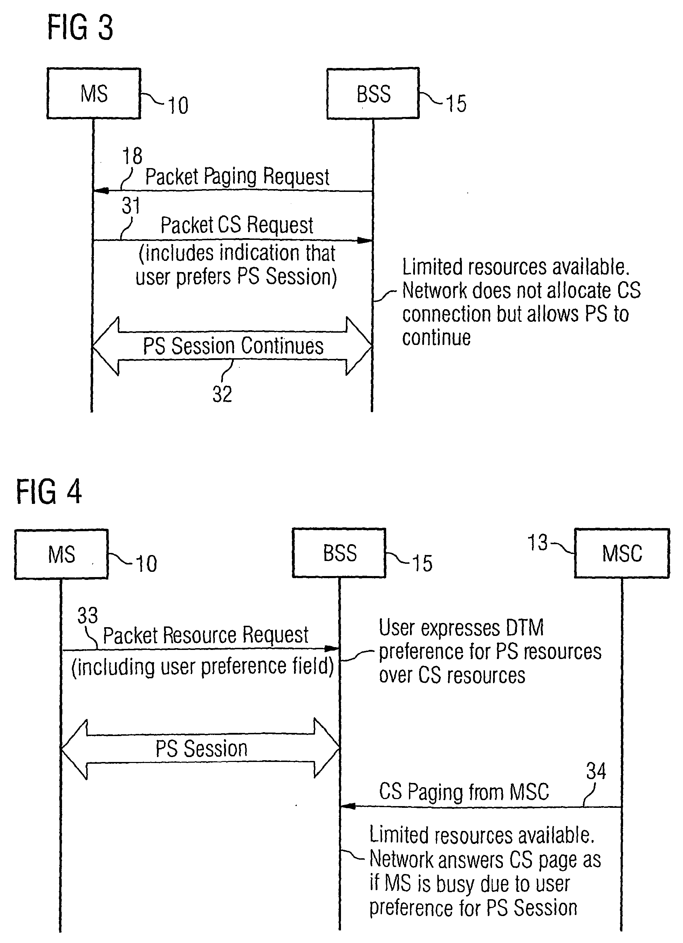

An additional example is shown in Fig. 3. At any time during, or even before, the PS session starts the user may express a preference to keep PS sessions, rather than receive CS calls. For example, when the MS 10 is paged for a CS call during a PS session the MS receives a packet paging request 18 from the BSS 15. The MS will then respond with a packet CS request message 31 (as currently defined for Release-6 behaviour) requesting that the network allocate both CS and PS resources and thus move into DTM. This response 31 from the MS includes an indication that the user prefers the PS session over any CS call. If the network is unable to allocate both resources, it takes note of user preference for PS resources and instead of allocating CS resources only, does not attempt any further resource allocation. The network simply maintains the current PS resources 32 and the PS session continues.

One option for implementing this preference is to define certain key combinations on the MS 10, for the user to input according to their preference. The network has the option to maintain the user preference for the duration of the session. In this case the network could avoid sending any unnecessary CS pages to MS until the PS Session has finished.

Fig. 4 shows an example of user preference for PS resources with a CS page and limited resources in which the decision on whether to maintain or drop the PS call is made at or before the start of the PS session, so that it is not necessary to notify the MS of the CS call, unless there are sufficient resources to support both the PS session and CS call. In this example, the mobile station 10 is a DTM capable mobile station and is able to provide a user preference for PS resources over CS resources, each time it sets up PS resources. In this case a packet resource request 33 from the MS to the BSS 15 is modified to contain a user preference field. Other messages from the mobile to the network associated with the establishment of PS resources can also be amended in this way. The user preference field is stored by the BSS 15 for evaluation, if and when a CS paging message 34 is received from the MSC 13 in the core network.

If a CS paging message 34 is received from the MSC 13 and the user has expressed a preference for PS resource over CS resources and there are insufficient resources in the BSS to allocate both PS and CS resources, then the paging message will be treated as if the end user is busy and the PS session will continue undisturbed.

The examples given above relate to 2G systems, but the invention is equally applicable to 3G systems. Although, 3G systems allow prioritisation of the radio access bearer, this can only be done in advance and it is the network which defines the constraints, whereas the method of the present invention allows the user to have control, rather than all users/subscribers to a particular service being so constrained.

Furthermore, the general or specific preferences are independent. For example, the user can preset a preference for circuit switched over packet switched before starting a PS download, but still keep an option to accept another call, depending on that caller's identity.

## Claims

1. A method of operating a communication system comprising a network (15) and at least one terminal, the method comprising receiving a page for a circuit switched call (14) at the terminal (10) whilst the terminal is engaged in a packet switched call;
wherein the network assesses whether there are sufficient resources for setting up the circuit switched call to operate simultaneously with the packet switched call; **characterized in that :**
wherein the terminal provides to the network an indication of a user preference for receiving the circuit switched call, or maintaining the packet switched call, if there are insufficient resources for operating the calls simultaneously;
and wherein communication between the network and the terminal continues in accordance with the indicated preference.

2. A method according to claim 1, wherein the user preference indication (31) is made in response to an indication of the identity of the circuit switched call.

3. A method according to claim 1, wherein the user preference indication (3 3) is made before starting a packet switched call.

4. A method according to claim 3, further comprising providing an indication (26) of the source of the circuit switched call to the terminal and enabling the user to change or confirm the user preference indication (27) in response to the source indication.

5. A method according to any preceding claim, wherein a circuit switched signalling message is encapsulated as a packet switched message and sent on an existing packet switched resource to page the terminal (10) in respect of the circuit switched call.

6. A method according to any preceding claim, wherein, if the user preference indication is for the packet switched call, the network (15) refrains from sending any further circuit switched pages to the terminal (10) until the packet switched call is complete.

7. A method according to any preceding claim, wherein the network (15) comprises a second or third generation network.

8. A method according to any preceding claim, wherein the network (15) comprises GERAN, UTRAN or GSM.

## Patentansprüche

1. Verfahren zum Betreiben eines Kommunikationssystems mit einem Netzwerk (15) und wenigstens einem Endgerät, wobei das Verfahren umfasst, einen Funkruf nach einem leitungsvermittelten Anruf (14) an dem Endgerät (10) zu empfangen, während das Endgerät an einem paketvermittelten Anruf beteiligt ist;
wobei das Netzwerk beurteilt, ob es ausreichend Ressourcen gibt, um den leitungsvermittelten Anruf aufzubauen, um gleichzeitig zusammen mit dem paketvermittelten Anruf zu durchzuführen;
**dadurch gekennzeichnet, dass**:
wobei das Endgerät dem Netzwerk eine Angabe einer Benutzerpräferenz hinsichtlich eines Empfangs des leitungsvermittelten Anrufs oder einer Beibehaltung des paketvermittelten Anrufs bereitstellt, wenn es unzureichende Ressourcen gibt, um die Anrufe gleichzeitig durchzuführen;
und wobei Kommunikation zwischen dem Netzwerk und dem Endgerät sich gemäß der angegebenen Präferenz fortsetzt.

2. Verfahren nach Anspruch 1, wobei die Benutzerpräferenzangabe (31) in Antwort auf eine Angabe der Identität des leitungsvermittelten Anrufs erfolgt.

3. Verfahren nach Anspruch 1, wobei die Benutzerpräferenzangabe (33) erfolgt, bevor ein paketvermittelter Anruf begonnen wird.

4. Verfahren nach Anspruch 3, ferner umfassend, eine Angabe (26) der Quelle des leitungsvermittelten Anrufs dem Endgerät bereitzustellen und den Benutzer in die Lage zu versetzen, in Antwort auf die Quellenangabe die Benutzerpräferenzangabe (27) zu ändern oder zu bestätigen.

5. Verfahren nach einem vorherigen Anspruch, wobei eine leitungsvermittelte Signalisierungsnachricht als paketvermittelte Nachricht eingekapselt wird und auf einer vorhandenen paketvermittelten Ressource gesendet wird, um das Endgerät (10) hinsichtlich des leitungsvermittelten Anrufs per Funk anzurufen.

6. Verfahren nach einem vorherigen Anspruch, wobei, wenn die Benutzerpräferenzangabe für den paketvermittelten Anruf besteht, das Netzwerk (15) es unterlässt, jegliche weitere leitungsvermittelte Funkrufe zu dem Endgerät (10) zu senden, bis der paketvermittelte Anruf abgeschlossen ist.

7. Verfahren nach einem vorherigen Anspruch, wobei das Netzwerk (15) ein Netzwerk der zweiten oder dritten Generation umfasst.

8. Verfahren nach einem vorherigen Anspruch, wobei das Netzwerk (15) GERAN, UTRAN oder GSM umfasst.

## Revendications

1. Procédé d'exploitation d'un système de communication comprenant un réseau (15) et au moins un terminal, le procédé comprenant l'étape consistant à faire recevoir un appel ("a page") pour un appel commuté par circuit (14) par le terminal (10) tandis que le terminal est en cours d'appel commuté par paquet ;
dans lequel le réseau évalue si les ressources sont suffisantes pour établir l'appel commuté par circuit afin de permettre un fonctionnement simultanément avec l'appel commuté par paquet ; **caractérisé en ce que**
dans lequel le terminal fournit au réseau une indication d'une préférence utilisateur de réception de l'appel commuté par circuit ou de maintien de l'appel commuté par paquet, si les ressources sont insuffisantes pour traiter les appels simultanément ;
et dans lequel la communication entre le réseau et le terminal se poursuit selon la préférence indiquée.

2. Procédé selon la revendication 1, dans lequel l'indication de préférence utilisateur (31) est effectuée en réponse à une indication de l'identité de l'appel commuté par circuit.

3. Procédé selon la revendication 1, dans lequel l'indication de préférence utilisateur (33) est effectuée avant de commencer un appel commuté par paquet.

4. Procédé selon la revendication 3, comprenant en outre les étapes consistant à fournir une indication (26) de la source de l'appel commuté par circuit au terminal et à permettre à l'utilisateur de changer ou de confirmer l'indication de préférence utilisateur (27) en réponse à l'indication de source.

5. Procédé selon l'une quelconque des revendications précédentes, dans lequel un message de signalisation commuté par circuit est encapsulé sous forme d'un message commuté par paquet et envoyé sur une ressource commutée par paquet existante pour appeler le terminal (10) en ce qui concerne l'appel commuté par circuit.

6. Procédé selon l'une quelconque des revendications précédentes, dans lequel, si l'indication de préférence utilisateur est pour l'appel commuté par paquet, le réseau (15) s'interdit d'envoyer d'autres appels commutés par circuit au terminal (10) jusqu'à ce que l'appel commuté par paquet soit terminé.

7. Procédé selon l'une quelconque des revendications précédentes, dans lequel le réseau (15) comprend un réseau de deuxième ou troisième génération.

8. Procédé selon l'une quelconque des revendications précédentes, dans lequel le réseau (15) comprend GERAN, UTRAN ou GSM.
